# EUROPEAN PATENT APPLICATION

(11) **EP 1 881 659 A1**
(43) Date of publication of application: **23.01.2008**
(21) Application number: 07252897.9
(22) Date of filing: 20.07.2007
(51) Int. Cl.: H04L 12/58, G06K 9/46, G06F 17/30

(54) **Identification of similar images**

(30) Priority: 21.07.2006 GB 0614560
(71) Applicant: Clearswift Limited, Reading, Berkshire RG7 4SA (GB)
(72) Inventor: Maidment, Robert, Berkshire RG7 4SA (GB); Cumming, John, Berkshire RG7 4SA (GB)
(74) Representative: O'Connell, David Christopher

(57) **Abstract**

A method of processing a received image file, comprises receiving the image file; and detecting a match between the received image file and a previously received image file, if (a) the received image file differs from the previously received image file, and (b) an image represented by the received image file is visually identical to an image represented by the previously received image file.

## Description

The present invention relates in general to the field of image recognition, and in particular to methods of identifying similar images held as computer files and identifying unwanted e-mails containing those image files.

### BACKGROUND

E-mail is a useful tool as a way of communicating, but over the years the problem of unsolicited e-mail, or spam, has become very serious. Various mechanisms for detecting spam and throwing it away have been discovered, while those responsible for sending spam, "spammers" devise alternative approaches for defeating these mechanisms. One of the more recent spamming methods has been sending an e-mail containing an image containing both text and pictures. This sidesteps most conventional e-mail scanning techniques, which rely on reading and analysing the text of a document.

Other anti-spam techniques comprise taking a digital signature of the entire e-mail and keeping a central database of such signatures where the content has been identified as spam. In response to this, the spammers have been generating compressed images that differ by a few pixels and/or use slightly different levels or methods of compression. In this case, every unwanted e-mail is slightly different and the mechanism relying on comparison of digital signatures is thwarted, even though the images are essentially identical to the human eye.

What is wanted, therefore, is a mechanism for identifying images that are only very slightly different.

Bayesian probability techniques have been known for some time as a way of locating similar text documents. Documents are grouped together that share the same set of words that would otherwise be relatively unusual, providing a way of locating similar documents to an initial one. Documents that have been grouped into similar sets by a human user are fed into a Bayesian engine marked with a keyword. The engine learns from this and produces a database that stores probabilistic data that allows it to make decisions about further documents being associated with a particular group.

Bayesian techniques are widely used in anti-spam systems, providing a mechanism to identify text that is broadly similar. A corpus of wanted e-mail ("ham") is fed into a Bayesian engine and marked as "ham". A similar corpus of unwanted e-mail ("spam") is also fed in and marked as such. The Bayesian engine learns from this and produces a database that stores probabilistic data that allows it to make decisions about further documents, identifying them either as spam or as ham. An improvement on this allows feedback from those decisions to further improve the database. A further improvement identifies word stems so that, say, "prescriptions" and "prescribing" are matched to the same stem.

Myers et al disclose in US 2005/0216564 a mechanism for identifying text in images that might be spam; this application appears to use techniques disclosed in US 7,043,080 concerning a mechanism for identifying text in images. The text so identified is then treated as normal text in an e-mail, and searched for anything that might indicate that it was unsolicited e-mail. No mention is made of handling non-text portions of an image.

Savakis et al disclose in US 6,847,733 a mechanism for assessing an image with respect to certain features, wherein the assessment is a determination of the degree of importance, interest or attractiveness of the image, initially as perceived by humans and then automatically via a Bayesian reasoning algorithm. This does not discuss identifying highly similar images.

### SUMMARY OF INVENTION

According to the present invention, there is provided a method of processing a received image file, comprising:
receiving the image file; and
detecting a match between the received image file and a previously received image file, if (a) the received image file differs from the previously received image file, and (b) an image represented by the received image file is visually identical to an image represented by the previously received image file.

According to the present invention, there is provided a method of identifying unwanted email messages, the method comprising:
determining that a received email message includes an image file;
detecting a match between the image file and a previously received image file, if (a) the image file differs from the previously received image file, and (b) an image represented by the image file is visually identical to an image represented by the previously received image file; and
determining that the received email message is unwanted if a match is detected with a previously received image file from a previously received unwanted email message.

### BRIEF DESCRIPTION OF DRAWINGS

For a better understanding of the present invention, and to show more clearly how it may be carried into effect, reference will now be made, by way of example, to the following drawings, in which:
Figure 1 is a block schematic diagram of an anti-spam e-mail system according to the present invention.
Figure 2 is a flow chart, illustrating a first method in accordance with the invention.
Figure 3 is a flow chart, illustrating a second method in accordance with the invention.

### DETAILED DESCRIPTION OF PREFERRED EMBODIMENTS

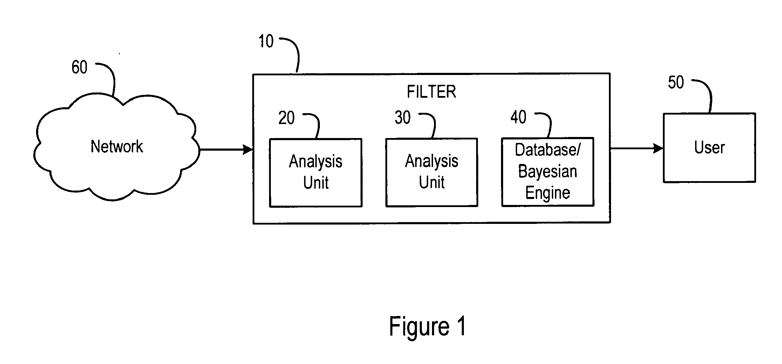

Figure 1 is a block schematic diagram of an anti-spam e-mail system.

The anti-spam e-mail system includes a filter 10 in accordance with the present invention. The filter 10 comprises a first analysis unit 20, a second analysis unit 30, and a comparison unit 40. As discussed in more detail below, the comparison unit 40 includes a database, and may be a Bayesian engine.

In operation, an e-mail addressed to a user 50 is sent from an external network 60. For the purposes of the present invention, the e-mail contains one or more image files, either as an attachment or embodied in the main message.

Before reaching the user 50, the e-mail is intercepted by the filter 10. The filter may be located in the user's computer, or in a mail server of the user's internet service provider, or in a mail server in a local area network to which the user 50 is connected. The filter 10 determines whether the received e-mail is wanted or unwanted in accordance with a method that will be described in further detail below. The filter 10 may be provided as a part of a computer software product having various functions in connection with e-mail processing.

Further transmission of the e-mail from the filter 10 to the user 50 is dependent on the settings and preferences of the user. For example, the user 50 may set the system so that e-mails determined as unwanted (i.e. containing one or more unwanted images) are not forwarded, or their images deleted before forwarding. Many different possibilities will be apparent to one skilled in the art, and are to be considered as within the scope of the present invention.

As mentioned above, Bayesian techniques are well known in the art as a way of locating similar text documents. According to the present invention, rather than applying Bayesian techniques to words within text documents, an "essence" of an image is defined and used to identify similar images.

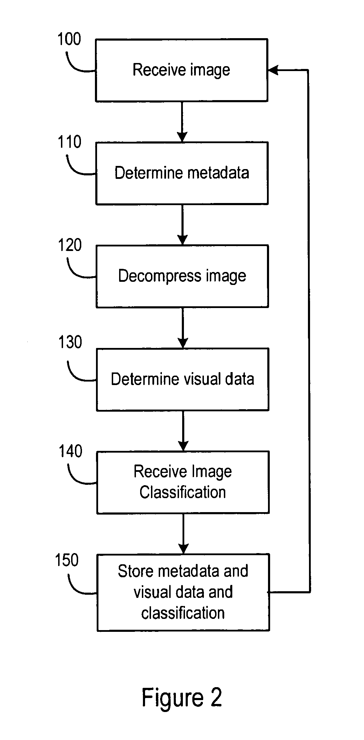

Figure 2 is a flowchart of a method of identifying similar images in accordance with the present invention.

In step 100, a new image is received. As discussed with reference to Figure 1, the image may be attached to or enclosed within the body of an e-mail. However, in principle the image may have been received or chosen from many different sources. For example, the image may be embodied on a CD or other medium, or it may have been chosen as a starting image, from which a search engine is to search for other similar images.

In step 110, the metadata of the image is obtained. This step is performed by the first analysis unit 20 in the e-mail filtering embodiment of Figure 1. In the sense of the present invention, metadata is data about the image, but not the data which makes up the image itself. For example, metadata may include one or more of the following: the compression mechanism (i.e. jpeg, gif, etc) used to generate the image file, the image size (i.e. the x by y size of the image), the resolution (i.e. the number of pixels making up the image), the pixel depth (i.e. the number of bits of data for each pixel in the image) and the colour palette used (i.e. when the pixel depth determines that 256 colours are available, for example, the selection of those 256 colours). However, one skilled in the art may think of further file characteristics that may be termed metadata according to the present invention.

In step 120, the image file is decompressed to a bitmap. Of course, if the original image is a bitmap this step is unnecessary. Further, to the extent that it may be possible to identify structure, shapes and colour within the actual image without decompressing the image file, this step is also to be considered as unnecessary.

In step 130, the visual data of the image is obtained. This step is performed by the second analysis unit 30 in the e-mail filtering embodiment of Figure 1. In the sense of the present invention, visual data is the data making up the image itself.

In this illustrated embodiment of the invention, not all of the image data is used.
Rather, a subset of the image data is used.

More specifically, in this illustrated embodiment, the image is searched for blocks of contiguous pixels of substantially the same colour. Although in principle the blocks can be any shape, in a preferred embodiment the blocks are rectangular. This is the simplest shape and therefore reduces the complexity of the process.

However, in the illustrated embodiment, it is not required that all pixels in the block be of the same colour. Specifically, some pixels of different colours are allowed within the block, although the number of allowed pixels of different colours is generally a low percentage of the total number of pixels in the block. Thus, the number of pixels, having a colour significantly different from the basic colour of the block, is compared with a threshold. This threshold is user-definable, typically less than 5%, or less than 1%, and possibly as low as 0.2% or even 0.1 %, of the total number of pixels in the block. Moreover, some minor variation in the colour may be permitted over a block of contiguous pixels of substantially the same colour.

The search of the image for the blocks of contiguous pixels of substantially the same colour can be configured such that it finds a predetermined number of such blocks (preferably the largest blocks meeting the specified criteria), or such that it finds all blocks meeting the specified criteria above a predetermined size, or such that it finds blocks meeting the specified criteria that make up a predetermined proportion of the total image.

The visual data used in the illustrated embodiment of the invention relates to these blocks of contiguous pixels. For example, the visual data may comprise one or more of: the colour of the pixels making up each block, the sizes of the blocks, the absolute or relative positions of the blocks, and the absolute or relative orientations of the blocks. As with the metadata described above, many other characteristics may be thought of by one skilled in the art that may be termed visual data according to the above definition.

In step 140, the image is classified. In one embodiment, classification of the image is performed by human user input.

This classification may take many forms. For example, where the system is part of an e-mail filtering system, as described with reference to Figure 1, the user may identify the image as a particular unwanted image.

However, it should be appreciated that the above-described method of classification could have many applications, not just in e-mail filtering. For example, in another embodiment of the invention, where the system is part of an image retrieval system, the filter performing the methods according to the invention could be provided as part of a computer software product having various searching functions, or as a specialized computer software product having image retrieval functions. In the case of an image retrieval system, the images in a database for a search engine could be classified according to the above method with reference to a creator, a title, or a catalogue number, for example.

In such a system, there may be any number of possible classifications, which can be more or less detailed, as required. In this way, similar images could be searched for, as described in more detail below, without relying solely on the text attached to the stored images.

In another embodiment, the image may be provided with the system as an example of an unwanted image, say. In this embodiment, the classification of the image is already known, and step 140 simply comprises obtaining the known classification from whichever medium it is stored on.

When the classification has been input, the process then proceeds to step 150, where the metadata, the visual data and the classification are stored in a database 40. The stored visual data may be recompressed if desired. After storing the data, the process begins again at step 100 with a new image.

By repeatedly cycling through the steps 100-150, the user builds a "library" of data, with which future received images can be compared. The library consists of the signature data, or essence, of many images, plus their classification. In another embodiment, the library of data is provided with the system, so that the user does not have to spend a large amount of time classifying images manually.

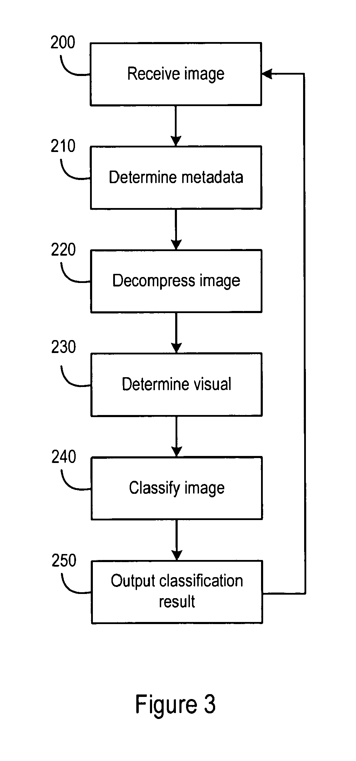

Figure 3 is a flow chart showing the classification of a newly received unclassified image, according to an embodiment of the present invention.

When a library of sufficient size has been built, the system can begin to automatically determine the classification of a newly received image.

In step 200, a new image is received. As discussed with reference to Figure 2, the image may be attached to or enclosed within the body of an e-mail, or may have been received or chosen from many different sources. For example, the image may be embodied on a CD or other medium, or it may have been found by a search engine on a web page or elsewhere.

In step 210, the metadata of the new received image is obtained, as discussed above with reference to step 110 in the process of Figure 2.

In step 220, the image file is decompressed to a bitmap, as discussed above with reference to step 120 in the process of Figure 2.

In step 230, the visual data relating to the image is obtained, as discussed above with reference to step 130 in the process of Figure 2.

In step 240, the system attempts to classify the image, by determining whether it matches any of the images in the library of previously classified images.

In particular, it should be noted that the system does not attempt to identify images that are identical in all respects to previously classified images, that is, in which the image files are identical. This could be determined more easily by, for example, forming a hash of the image file and comparing it with a hash of the previously classified image files. Rather, the system, in the preferred embodiment, attempts to detect images which have had one or more changes introduced, such that they are no longer identical in all respects to any previously classified image, but such that they appear identical to a human viewer. They can thus be considered as visually identical.

Thus, for example, in the case of images in unwanted e-mail messages, it becomes possible to detect images which are slightly varied versions of images in previously identified unwanted e-mail messages.

Similarly, it becomes possible for an owner of an image to release slightly varying versions of the image file, with those slight variations serving as identifiers, and then to track those varied images by means of suitable image searches, and be able to recognize the origins of the images so found.

In a first preferred embodiment, the metadata and the visual data of the received image must match exactly the metadata and the visual data of a previously classified image for the received image to be given the same classification as the previously classified image. It should be noted that, even though the metadata and the visual data of the received image may match exactly the metadata and the visual data of a previously classified image, this does not require that the two image files should be identical.

As mentioned above, in the preferred embodiment of the invention, the visual data is made up of data describing blocks of contiguous pixels within the image. However, it is not required that those blocks be exactly uniform in colour, and it is not expected to be the case that the blocks will together make up all of the image. Therefore it is entirely possible that some of the pixels in the image may have been changed from a starting image, but that the visual data used in the described embodiments would be unchanged.

In a second preferred embodiment, the metadata of the received image must match exactly the metadata of a previously classified image, and the corresponding visual data of each image must substantially match, for the received image to be given the same classification as the previously classified image.

In a third preferred embodiment, the visual data of the received image must match exactly the visual data of a previously classified image, and the corresponding metadata of each image must substantially match, for the received image to be given the same classification as the previously classified image.

In a fourth preferred embodiment, the metadata and the visual data of the received image must substantially match the metadata and the visual data of a previously classified image for the received image to be given the same classification as the previously classified image.

Whether a "substantial match" has been achieved can for example be determined by comparing any differences with a threshold. For example, the blocks may vary slightly in size or position, or indeed the number of blocks found may vary slightly, while still being sufficiently similar for a substantial match to be found. This provides a second level of "fuzziness" when matching a received image to a previously received image, a first level of fuzziness being provided by allowing a small number of pixels to vary in colour within the blocks as described above.

However, as mentioned above, the database 40 may be part of a Bayesian engine. In this case, the metadata and the visual data need not match exactly with those of a previously classified image. The Bayesian engine 40 instead calculates the probability that a received image is for example one of the previously identified images, by comparing the metadata and the visual data of the received image with the metadata and the visual data of the previously identified images.

In step 250, the comparison unit 40 returns its output to the user. Thus, in one embodiment, where the comparison unit 40 is a Bayesian engine, it returns the probabilities that the received image corresponds to one of the previously identified images. In other embodiments, the Bayesian engine may return only the most likely of the previously identified images, for example. The user may then have the opportunity to confirm or correct the suggestion put forward by the Bayesian engine.

In this case, the metadata, the visual data and the classification may be stored in the database of the comparison unit 40. In this way, the library of stored data is continually updated and improved. In particular, by the correction or confirmation by the user of the suggestions, the Bayesian engine will be able to improve its suggested classification of subsequent newly received images.

By introducing a degree of flexibility in the requirements for a match with a previously classified image, the present method may overcome the afore-mentioned spamming techniques whereby images are changed slightly. Similarly, the present method can be used, for example, in search engines, for searching for similar images.

## Claims

1. A method of processing a received image file, comprising:
receiving the image file; and
detecting a match between the received image file and a previously received image file, if (a) the received image file differs from the previously received image file, and (b) an image represented by the received image file is visually identical to an image represented by the previously received image file.

2. A method as claimed in claim 1, wherein said detecting step comprises:
obtaining visual data relating to the received image;
comparing said visual data of the received image with visual data of the previously received image; and
on the basis of said comparison, determining whether the received image is visually identical to the previously received image.

3. A method as claimed in claim 2, wherein said step of obtaining visual data comprises finding blocks of contiguous pixels of substantially the same colour within the image.

4. A method as claimed in claim 2 or 3, wherein said blocks are rectangular.

5. A method as claimed in any one of claims 3 and 4, wherein said visual data comprises one or more of the size, position, orientation and colour of each block of contiguous pixels.

6. A method as claimed in any preceding claim, wherein said detecting step comprises:
obtaining metadata relating to the received image;
comparing said metadata of the received image with metadata of the previously received image; and
on the basis of said comparison, determining whether the received image is visually identical to the previously received image.

7. A method as claimed in claim 6, wherein said metadata comprises one or more of the compression mechanism, pixel depth, colour palette, image size, and resolution of the image file.

8. A method as claimed in claim 6 or 7, when dependant on claim 2, wherein a match is detected if the visual data and the metadata of the received image match exactly the visual data and the metadata of the previously received image.

9. A method as claimed in claim 6 or 7, when dependant on claim 2, wherein a match is detected if the visual data and the metadata of the received image substantially match the visual data and the metadata of the previously received image.

10. A method as claimed in claim 6 or 7, when dependant on claim 2, wherein a match is detected if the visual data of the received image matches exactly the visual data of the previously received image and the metadata of the received image substantially matches the metadata of the previously received image.

11. A method as claimed in claim 6 or 7, when dependant on claim 2, wherein a match is detected if the visual data of the received image substantially matches the visual data of the previously received image and the metadata of the received image matches exactly the metadata of the previously received image.

12. A method as claimed in any one of claims 2-11, wherein the visual data and the metadata of the previously received image are stored in a database.

13. A method as claimed in claim 12, further comprising:
storing the visual data and the metadata of the received image in the database.

14. A method as claimed in claim 12 or 13, wherein the database is part of a Bayesian engine.

15. A method as claimed in claim 14, further comprising the step of using the Bayesian engine to determine the probability that the received image is visually identical to the previously received image.

16. A method as claimed in any one of the preceding claims, wherein the received image file is embedded in an e-mail.

17. A method as claimed in claim 16, wherein the previously received image is classified as unwanted, and further comprising:
if a match is detected between the received image file and the previously received image file, classifying the e-mail as unwanted accordingly.

18. A method of identifying unwanted email messages, the method comprising:
determining that a received email message includes an image file;
detecting a match between the image file and a previously received image file, if (a) the image file differs from the previously received image file, and (b) an image represented by the image file is visually identical to an image represented by the previously received image file; and
determining that the received email message is unwanted if a match is detected with a previously received image file from a previously received unwanted email message.

19. A computer program product, comprising computer-readable code for performing a method as claimed in any preceding claim.
